# FASCICULE DE BREVET EUROPEEN

(11) **EP 3 483 773 B1**
(45) Date de publication et mention de la délivrance du brevet: **08.07.2020**
(21) Numéro de dépôt: 18203406.6
(22) Date de dépôt: 30.10.2018
(51) Int. Cl.: G06F 21/75, H04L 9/00, H03K 19/003, G09C 1/00

(54) **PROCÉDÉ DE MODIFICATION ALÉATOIRE DU PROFIL DE CONSOMMATION D'UN CIRCUIT LOGIQUE, ET DISPOSITIF ASSOCIÉ**
VERFAHREN ZUR ZUFÄLLIGEN ÄNDERUNG DES VERBRAUCHSPROFILS EINER LOGISCHEN SCHALTUNG UND ZUGEHÖRIGE VORRICHTUNG.
METHOD FOR RANDOMLY MODIFYING THE CONSUMPTION PROFILE OF A LOGIC CIRCUIT, AND ASSOCIATED DEVICE

(30) Priorité: 13.11.2017 FR 1760637
(43) Date de publication de la demande: 15.05.2019
(73) Titulaire: STMicroelectronics (Rousset) SAS, 13790 Rousset (FR)
(72) Inventeur: SARAFIANOS, Alexandre, 83910 Pourrieres (FR); ORDAS, Thomas, 83470 Pourcieux (FR); LINGE, Yanis, 13710 Fuveau (FR)
(74) Mandataire: Casalonga

(56) Documents cités:
- US-B1- 6 419 159
- US-B1- 6 625 737

## Description

Des modes de mise en œuvre et de réalisation de l'invention concernent les circuits intégrés, et notamment mais non exclusivement ceux comportant des circuits logiques, et en particulier la gestion de la consommation en courant de ce type de circuit en fonctionnement, par exemple en vue de masquer cette consommation de courant.

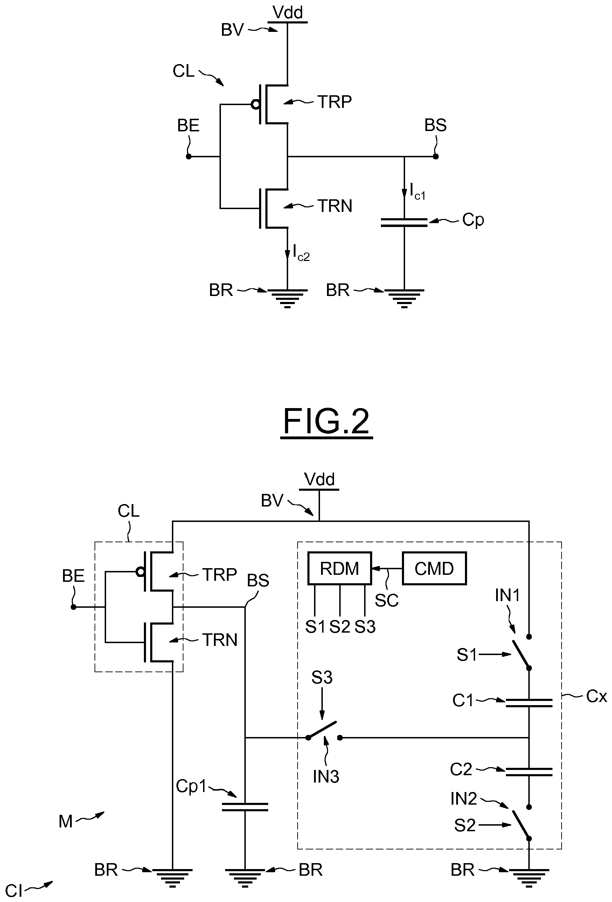

La figure 1 illustre un circuit logique CL de type inverseur couplé entre une borne d'alimentation BV, destinée à recevoir une tension d'alimentation Vdd, et une borne de référence BR, destinée à recevoir une tension de référence, par exemple ici la masse. Le circuit logique CL comprend classiquement une borne d'entrée BE et une borne de sortie BS.

La borne de sortie BS peut être ici couplée à l'entrée d'un autre composant du circuit intégré CI (non-représenté), par exemple à un autre inverseur. Ce couplage peut générer des capacités parasites, dues par exemple aux capacités de grille des transistors de l'autre inverseur.

Sur la figure 1, cette capacité parasite est représentée par un condensateur parasite Cp.

Le circuit logique CL comporte classiquement un transistor NMOS TRN couplé en série avec un transistor PMOS TRP entre la borne d'alimentation BV et la borne de référence BR. La borne d'entrée BE du circuit logique est couplée aux grilles des deux transistors, et la borne de sortie BS est couplée au nœud commun aux deux transistors, ici le nœud commun au drain du transistor PMOS TP1 et au drain du transistor NMOS TN1.

Ainsi, lors de la transition du signal présent sur la borne d'entrée BE d'un état haut vers un état bas, le transistor PMOS TRP devient passant et le transistor NMOS TRN devient bloqué. Le condensateur Cp se charge alors grâce au courant I_{C1} circulant au travers du transistor PMOS TRP. Le temps de charge du condensateur étant très court, ce courant peut être assimilé à un pic de courant de charge Ic₁.

De plus, la commutation simultanée des deux transistors crée pendant un court intervalle de temps un court-circuit entre la borne d'alimentation BV et la borne de référence BR. Cet intervalle de temps est d'autant plus important que la commutation est lente. Ainsi, à chaque commutation, un pic de courant de court circuit Ic₂ circule entre la borne d'alimentation BV et la borne de référence BR au travers des deux transistors TRP et TRN.

Le pic de courant généré lors d'une transition du signal délivré par la borne de sortie BS d'un état bas vers un état haut peut avoir une valeur différente de celle du pic de courant généré lors d'une transition d'un état haut vers un état bas.

Lors d'une transition du signal présent sur la borne de sortie BS d'un état bas vers un état haut, le circuit logique CL consomme un courant supérieur à celui qu'il consomme lors d'une transition d'un état haut vers un état bas, puisque dans le premier cas le courant consommé est la somme du courant de charge Ic₁ du condensateur parasite Cp et du courant de court-circuit Ic₂ et dans le deuxième cas le courant consommé correspond seulement au courant de court-circuit Ic₂.

Ainsi, en analysant la consommation en courant d'un circuit intégré comportant des portes logiques, à l'aide par exemple d'une sonde électromagnétique placée au niveau de la borne d'alimentation et d'algorithmes dédiés, il est possible d'obtenir des informations sur les opérations effectuées ainsi que sur les données manipulées et/ou sur leurs occurrences.

En outre, lors d'une transition du signal présent sur la borne de sortie BS d'un état haut vers un état bas, la décharge du condensateur parasite Cp génère un courant supplémentaire circulant à l'intérieur du circuit intégré.

Il convient de noter que ce courant supplémentaire n'est pas observable depuis la borne d'alimentation BV, mais peut toutefois être détecté par exemple par une analyse des émissions électromagnétiques globales du circuit intégré.

Il est donc recommandé de masquer autant que possible la consommation en courant du circuit intégré.

Il existe des solutions pour masquer la consommation en courant d'un circuit intégré, comme par exemple la technique du double rail (« Dual rail technique » en langue anglaise) qui lisse la consommation en courant d'un circuit intégré en générant un courant complémentaire au courant de consommation réel des circuits logiques du circuit.

Cela étant cette solution est contraignante puisqu'elle implique de masquer également la consommation en courant de portes logiques dont il n'est pas nécessaire de masquer la consommation. Par ailleurs, cette technique est coûteuse en surface, puisqu'elle nécessite de doubler le nombre de portes logiques du circuit intégré.

Il existe des solutions permettant de masquer la consommation en courant d'un circuit logique sans masquer celles des autres composants, mais les solutions existantes sont complexes et requièrent l'utilisation de nombreux composants.

Les documents US 6 419 159 B1 et US 6 625 737 B1 divulguent des procédés de protection d'un circuit contre les attaques par analyse de consommation (differential power analysis) au moyen d'un courant additionnel généré de manière aléatoire.

Ainsi, selon un mode de réalisation, il est proposé de masquer la consommation en courant d'un circuit logique incorporé au sein d'un circuit intégré, en utilisant des moyens simples permettant de focaliser le masquage sur le circuit logique.

Selon un aspect, il est proposé un circuit électronique comportant une borne d'alimentation et une borne de référence comprenant au moins un module comportant au moins un circuit logique couplé entre la borne d'alimentation et la borne de référence et comportant une borne de sortie, et au moins un circuit auxiliaire couplé entre la borne d'alimentation et la borne de référence, et couplé à la borne de sortie, ledit au moins un circuit auxiliaire étant configuré pour réaliser au moins une action choisie dans le groupe formé par
- une atténuation du courant circulant entre la borne d'alimentation et la borne de référence,
- une augmentation du courant circulant entre la borne d'alimentation et la borne de référence,
- une circulation dans le circuit logique d'un courant supplémentaire sur un chemin ne passant pas par la borne d'alimentation,
ou bien ne réaliser aucune action, le choix de réaliser ou non une action et le choix éventuel de ladite au moins une action dans le groupe étant effectués en fonction d'un critère aléatoire.

Ainsi, le circuit auxiliaire permet avantageusement de créer des profils de consommation permettant de modifier, pour une même opération logique effectuée, la consommation en courant du circuit intégré, et donc de masquer la consommation en courant réelle du circuit logique, rendant difficile pour un attaquant l'analyse de cette consommation dans le but d'étudier le comportement du circuit intégré.

Le critère aléatoire peut être modifié au rythme des transitions du signal sur la borne de sortie, ou être modifié indépendamment du rythme d'occurrence des transitions du signal sur la borne de sortie.

Selon un mode de réalisation, le circuit auxiliaire comporte au moins un premier condensateur couplé entre la borne d'alimentation et la borne de sortie, au moins un deuxième condensateur couplé entre la borne de sortie et la borne de référence, ledit au moins un premier condensateur étant couplé à la borne d'alimentation par l'intermédiaire d'un premier interrupteur, le deuxième condensateur étant couplé à la borne de référence par l'intermédiaire d'un deuxième interrupteur, et les deux condensateurs étant couplés à la borne de sortie par l'intermédiaire d'un troisième interrupteur, les trois interrupteurs étant commandés indépendamment les uns des autres par un générateur de signaux aléatoires, l'ensemble des signaux aléatoires formant le critère aléatoire.

Ainsi, à chaque critère aléatoire correspond une combinaison des interrupteurs et donc un profil de consommation en courant.

L'utilisation de condensateurs activables par des interrupteurs permet avantageusement d'obtenir un circuit auxiliaire masquant efficacement la consommation en courant à l'aide de moyens simples et facilement réalisables par des procédés de réalisation classiques.

Le circuit auxiliaire peut comporter une pluralité de premiers condensateurs couplés en parallèle entre la borne d'alimentation et la borne de sortie, chaque premier condensateur étant couplé à la borne de sortie par l'intermédiaire d'un interrupteur distinct commandé indépendamment par le générateur de signaux aléatoires.

Le circuit auxiliaire peut comporter une pluralité de deuxièmes condensateurs couplés en parallèle entre la borne d'alimentation et la borne de sortie, chaque deuxième condensateur étant couplé à la borne de sortie par l'intermédiaire d'un interrupteur distinct commandé indépendamment par le générateur de signaux aléatoires.

En augmentant le nombre de condensateurs activables, on augmente le nombre de profils de consommation possibles du circuit auxiliaire, et donc avantageusement le caractère aléatoire de la consommation en courant.

Le module peut être configuré pour réaliser une succession d'opérations de calcul, le générateur de signaux aléatoires étant configuré pour délivrer les signaux aléatoires en réponse à un signal de commande, et le circuit auxiliaire comporte des moyens de commandes aptes à modifier le signal de commande à chaque nouvelle opération de calcul.

Cela permet de modifier le profil de consommation en courant de façon régulière, sans toutefois modifier le profil de consommation trop souvent, ce qui serait coûteux en puissance de calcul.

Le module peut être configuré pour réaliser des opérations de calcul, le générateur de signaux aléatoires étant configuré pour délivrer les signaux aléatoires en réponse à un signal de commande, et le circuit auxiliaire peut comporter des moyens de commande aptes à modifier le signal de commande selon un rythme indépendant des opération de calcul.

Il est ainsi possible de rendre le changement de profil de consommation indépendant du rythme des opérations réalisées par le module, et par exemple d'augmenter la fréquence des changements de profils, ce qui augmente avantageusement le caractère aléatoire de la consommation en courant.

Selon un mode de réalisation, le module comporte une pluralité de circuits logiques, chacun associé à un circuit auxiliaire, les interrupteurs de chaque circuit auxiliaire étant commandés de la même façon par le générateur de signaux aléatoires.

Selon un mode de réalisation, le module comporte une pluralité de circuits logiques, chacun associé à un circuit auxiliaire, les interrupteurs de chaque circuit auxiliaire étant commandés indépendamment par le générateur de signaux aléatoires.

Selon un aspect, il est proposé un système comprenant un circuit intégré tel que décrit précédemment, le système pouvant former une carte à puce ou un appareil informatique.

Selon un autre aspect, il est proposé un procédé de gestion de la consommation en courant d'un circuit logique alimenté entre une borne d'alimentation et une borne de référence et comportant au moins une borne de sortie, dans lequel, à chaque transition du signal sur la borne de sortie, on réalise au moins une action choisie dans le groupe formé par,
- une atténuation du courant circulant entre la borne d'alimentation et la borne de référence,
- une augmentation du courant circulant entre la borne d'alimentation et la borne de référence, ou
- une circulation dans le circuit logique d'un courant supplémentaire sur un chemin ne passant pas par la borne d'alimentation,

ou bien on ne réalise aucune action, le choix de réaliser ou non une action et le choix éventuel de ladite au moins une action dans le groupe étant effectués en fonction d'un critère aléatoire.

Le critère aléatoire peut être modifié au rythme des transitions du signal sur la borne de sortie, ou être modifié à un rythme indépendant du rythme d'occurrence des transitions du signal sur la borne de sortie.

D'autres avantages et caractéristiques de l'invention apparaîtront à l'examen de la description détaillée de mode de mise en œuvre et de réalisation de l'invention, nullement limitatifs, et des dessins annexés sur lesquels
- la figure 1, décrite précédemment, illustre l'art antérieur,
- les figures 2 à 9 illustrent des modes de mise en œuvre et de réalisation de l'invention.

La figure 2 illustre schématiquement d'un point de vue électrique un circuit intégré CI incorporant un module M contenant un circuit logique CL comportant une borne d'entrée BE et une borne de sortie BS, et couplé à un circuit auxiliaire Cx.

Le circuit logique CL et le circuit auxiliaire Cx sont tous les deux couplés entre une borne d'alimentation BV configurée pour recevoir une tension d'alimentation Vdd, par exemple délivrée par un module d'alimentation (non représenté), et une borne de référence BR configurée pour recevoir une tension de référence, ici la masse.

Le circuit logique CL est ici un inverseur, comportant classiquement un transistor PMOS TRP et un transistor NMOS TRN montés en série entre la borne d'alimentation BV et la borne de référence BR.

L'inverseur comporte la borne d'entrée BE, couplée à la grille du transistor PMOS TRP et à la grille du transistor NMOS TRN, et la borne de sortie BS couplée entre le transistor NMOS TRN et le transistor PMOS TRP, et à un autre circuit logique dont le couplage génère une première capacité parasite C1.

La borne de sortie BS peut être ici couplée à l'entrée d'un autre composant du circuit intégré CI (non représenté), par exemple à un autre inverseur. Ce couplage peut générer des capacités parasites, dues notamment à la capacité de grille de l'autre inverseur.

Sur la figure 2, ces capacités parasites sont représentées par un premier condensateur parasite Cp1.

Il convient de noter que bien qu'il ait été décrit ici, par souci de simplification, un circuit logique étant un inverseur, le circuit logique CL pourrait être tout type de circuit logique, ou tout assemblage de circuits logiques dont la borne de sortie BS est apte à délivrer un signal de sortie pouvant prendre au moins deux états, un état bas correspondant au couplage de la borne de sortie BS à la borne de référence BR, et un état haut correspondant à un couplage de la borne de sortie BS à la borne d'alimentation BV.

Le circuit auxiliaire comprend ici un premier condensateur C1, couplé entre la borne d'alimentation BV et la borne de sortie BS, et un deuxième condensateur C2 couplé entre la borne de sortie S et la borne de référence BR. Le premier condensateur C1 et le deuxième condensateur C2 ont ici des valeurs capacitives différentes, mais pourraient tout à fait avoir des valeurs capacitives identiques.

Le premier condensateur C1 est couplé à la borne d'alimentation par l'intermédiaire d'un premier interrupteur IN1, le deuxième condensateur C2 est couplé à la borne de référence BR par l'intermédiaire d'un deuxième interrupteur IN2, et les deux condensateurs C1 et C2 sont couplés à la borne de sortie BS par l'intermédiaire d'un troisième interrupteur IN3.

En pratique, les interrupteurs sont par exemple réalisés par des transistors MOS, dont l'état passant correspond à la position fermée de l'interrupteur, et dont l'état bloqué correspond à l'état ouvert de l'interrupteur.

Le circuit auxiliaire Cx comporte un générateur RDM de signaux aléatoires, comportant ici 3 sorties configurées pour délivrer un premier signal S1, un deuxième signal S2, et un troisième signal S3, permettant de commander respectivement le premier interrupteur S1, le deuxième interrupteur S2, et le troisième interrupteur S3.

Les trois signaux S1, S2 et S3 peuvent prendre deux états, qui correspondent à une commande d'ouverture et de fermeture des interrupteurs.

Les signaux S1, S2 et S3 sont délivrés dans un état aléatoire par le générateur RDM de signaux aléatoires, en réponse à un signal de commande SC délivré au générateur RDM par des moyens de commande CMD.

Chaque combinaison des états des signaux aléatoires forme un critère aléatoire.

En fonctionnement, lorsque le module M réalise une succession d'opérations de calcul, par exemple une opération cryptographique, les moyens de commande CMD envoi le signal de commande SC à chaque nouvelle opération de calcul.

Ainsi, le générateur RDM délivre un critère aléatoire, c'est à dire les trois signaux dans des états aléatoires, et maintient ce critère aléatoire durant toute la durée de chaque opération cryptographique.

Durant une opération cryptographique, la sortie du circuit logique CL peut changer plusieurs fois d'état.

Le circuit auxiliaire comporte huit configurations, correspondant à huit combinaisons possibles des interrupteurs, et donc à 8 critères aléatoires.

Chaque configuration correspond à un profil de consommation en courant du module M, c'est à dire que pour une même opération réalisée par le circuit logique CL, la consommation en courant peut être différente d'une configuration à une autre.

Dans la première configuration, la deuxième configuration, et la troisième configuration, le troisième interrupteur IN3 est ouvert, et au moins un des deux autres interrupteurs IN1 et IN2 est ouvert.

Dans ces trois premières configurations, le circuit auxiliaire Cx n'a pas d'effet sur la consommation en courant de la porte logique. Le circuit intégré CI fonctionne donc comme si le circuit auxiliaire était absent.

Dans une quatrième configuration, le troisième interrupteur IN3 est ouvert, et le premier interrupteur IN1 et le troisième interrupteur IN3 sont fermés.

Dans cette quatrième configuration, le premier condensateur C1 et le deuxième condensateur C2 sont couplés en série entre la borne d'alimentation BV et la borne de référence BR. Ils se comportent donc comme des condensateurs de découplage.

Ainsi, lors d'une transition de l'état du signal sur la borne de sortie BS du circuit logique CL, le pic de courant de court-circuit et éventuellement le pic de courant de charge de la première capacité parasite Cp1 ne sont pas fournis uniquement par le module d'alimentation couplé à la borne d'alimentation BV, mais en partie par les condensateurs C1 et C2.

La quatrième configuration permet donc d'atténuer la consommation en courant observée au niveau de la borne d'alimentation BV.

Dans une cinquième configuration, le troisième interrupteur IN3 est fermé, et le premier interrupteur IN1 et le deuxième interrupteur IN2 sont ouverts.

Dans cette cinquième configuration, le premier condensateur C1 et le deuxième condensateur C2 ont tous les deux une électrode flottante, et n'ont pas d'effet sur le fonctionnement du circuit auxiliaire Cx.

Cela étant, la connexion entre la borne de sortie et les deux transistors, qui comporte une piste métallique, et le troisième interrupteur IN3 fermé, qui comporte classiquement un transistor à l'état passant, génèrent des capacités parasites.

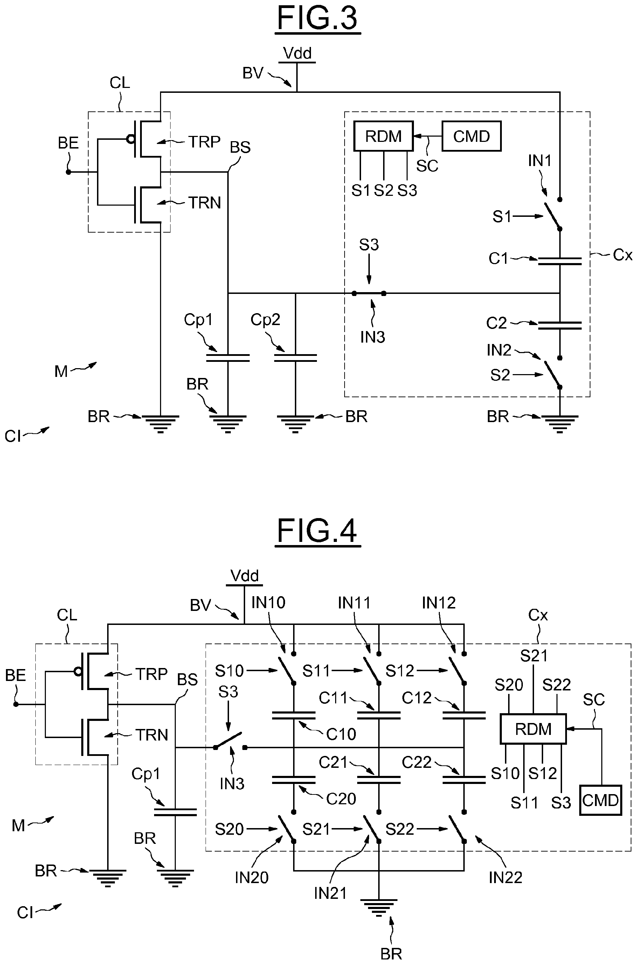

Ces capacités parasites peuvent être symbolisées par une deuxième capacité parasite Cp2, couplée entre la borne de sortie et la borne de référence, comme l'illustre la figure 3.

Ainsi, lors d'une transition du signal sur la borne de sortie BS d'un état haut vers un état bas, un deuxième courant de charge venant charger la deuxième capacité parasite Cp2 est généré.

Lors d'une transition du signal sur la borne d'entrée BE d'un état bas vers un état haut, la décharge du deuxième condensateur parasite Cp2 au travers du transistor NMOS TRN génère un courant supplémentaire circulant à l'intérieur du circuit intégré. Ce courant supplémentaire n'est pas fourni par la borne d'alimentation, et circule donc sur un chemin évitant la borne d'alimentation, ou en d'autres termes, ne passant pas par la borne d'alimentation.

Il convient de noter que ce courant n'est pas observable depuis la borne d'alimentation BV, mais peut être détecté par une attaque qui analyserait les émissions électromagnétiques du module M en fonctionnement.

La cinquième configuration permet donc d'augmenter la consommation en courant observée depuis la borne d'alimentation dans le cas d'une transition d'un état haut vers un état bas de la porte logique, et d'augmenter le courant circulant à l'intérieur du module dans le cas d'une transition d'un état haut vers un état bas.

La deuxième capacité parasite Cp2 est présente dans toutes les configurations dans lesquelles le troisième interrupteur IN3 est fermé, c'est à dire la quatrième configuration, étudiée précédemment, et sixième, septième et huitième configurations décrites ci-après. Elle est en général négligeable au vu des effets produits par le premier condensateur C1 et le deuxième condensateur C2.

Dans une sixième configuration, le troisième interrupteur IN3 est fermé, le premier interrupteur IN1 est ouvert, et le deuxième interrupteur IN2 est fermé.

Dans cette sixième configuration, le deuxième condensateur C2 se comporte de la même manière que le premier condensateur parasite Cp1.

Ainsi, lors d'un changement d'état du signal sur la borne de sortie BS d'un état bas vers un état haut, la borne de sortie BS est couplée à la borne d'alimentation BV, et le deuxième condensateur C2 se charge, ici au travers du transistor PMOS TRP. Un courant de charge supplémentaire est donc généré.

Lors d'un changement d'état du signal sur la borne de sortie d'un état haut vers un état bas, le deuxième condensateur C2 se décharge vers la masse, ici au travers du transistor NMOS TRN, et génère un courant de décharge, interne au circuit intégré et donc non observable depuis la borne d'alimentation.

Le deuxième condensateur C2 n'étant pas ici un condensateur parasite à proprement parler, sa valeur capacitive, et donc les courants qu'il génère, sont plus importants que pour le premier condensateur parasite Cp1 et pour le deuxième condensateur parasite Cp2.

La sixième configuration permet donc, en plus de produire les effets de la cinquième configuration décrits précédemment, d'augmenter le courant consommé par le circuit intégré lors d'une transition du signal sur la borne de sortie d'un état bas vers un état haut, et de générer un courant interne lors d'une transition du signal sur la borne de sortie d'un état haut vers un état bas.

Dans une septième configuration, le premier interrupteur IN1 et le troisième interrupteurs IN3 sont fermés, et le deuxième interrupteur IN2 est ouvert.

Dans cette septième configuration, le premier condensateur C1 est couplé entre la borne d'alimentation BV et la borne de sortie BS, et le deuxième condensateur C2 est déconnecté.

Lors d'une transition du signal sur la borne de sortie BS d'un état bas vers un état haut, le premier condensateur C1 a ses deux électrodes couplées à la borne de d'alimentation BV. Dans ce cas, le premier condensateur C1 n'a pas d'effet sur la consommation en courant du circuit intégré CI, et seul les effets du deuxième condensateur parasite Cp2, décrits précédemment, sont produits.

Lors d'une transition du signal sur la borne de sortie BS d'un état haut vers un état bas, le premier condensateur C1 se décharge vers la masse au travers du transistor MOS TRN.

Un courant circule donc au sein du circuit intégré CI, de façon interne et donc non observable depuis la borne d'alimentation BV. A ce courant s'ajoute le courant produit par la décharge du deuxième condensateur parasite Cp2.

Dans la huitième configuration, tous les interrupteurs sont fermés.

Le circuit auxiliaire Cx produit donc dans ce cas, de façon combinée, les effets de la quatrième configuration à la septième configuration.

Ainsi, en délivrant les signaux S1, S2, S3 de façon aléatoire, le circuit auxiliaire Cx est aléatoirement dans l'une ou l'autre des configurations.

La consommation en courant observable à chaque changement d'états du signal sur la borne de sortie BS du circuit logique CL varie de façon aléatoire.

Le passage d'une configuration à une autre, choisie aléatoirement, c'est à dire la génération d'un nouveau critère aléatoire en réponse au signal de commande SC, peut se faire à chaque nouvelle opération réalisée par le module M, ou bien être cadencée de façon régulière selon un rythme défini par un signal d'horloge, indépendamment des opérations réalisées par le module M.

Afin d'améliorer encore davantage le comportement aléatoire de la consommation en courant du module M, il serait possible, comme l'illustre la figure 4, que le circuit auxiliaire Cx comporte plusieurs premiers condensateurs et plusieurs deuxièmes condensateurs.

Ici, le circuit auxiliaire Cx comporte trois premiers condensateurs C10, C11, et C12, couplés en parallèle entre la borne d'alimentation BV et la borne de sortie BS, et couplés à la borne d'alimentation BV par l'intermédiaire de trois premiers interrupteurs IN10, IN11, IN12.

Ici, le circuit auxiliaire Cx comporte trois deuxièmes condensateurs C10, C11, et C12, couplés en parallèle entre la borne de sortie BS et la borne de référence BR, et couplés à la borne de référence BR par l'intermédiaire de trois deuxièmes interrupteurs IN10, IN11, IN12.

Chacun des condensateurs a ici une valeur capacitive distincte, mais il serait tout à fait possible que les condensateurs aient tous la même valeur capacitive, ou que certains seulement aient la même valeur capacitive.

Les interrupteurs sont ici configurés pour être commandables indépendamment les uns des autres par le générateur RDM de signaux aléatoires.

Le générateur RDM de signaux aléatoires comporte donc ici sept sorties, configurées pour délivrer sept signaux S10, S11, S12, S20, S21, S22, S3, respectivement à destination des interrupteurs IN10, IN11, IN12, IN20, IN21, IN22, IN3.

Les sept signaux pouvant prendre aléatoirement deux états correspondant à un état fermé et à un état ouvert de l'interrupteur associé.

Ainsi, le circuit auxiliaire Cx permet cent vingt huit combinaisons d'interrupteur, c'est à dire cent vingt huit profils de consommation, améliorant ainsi davantage le caractère aléatoire de la consommation du module M.

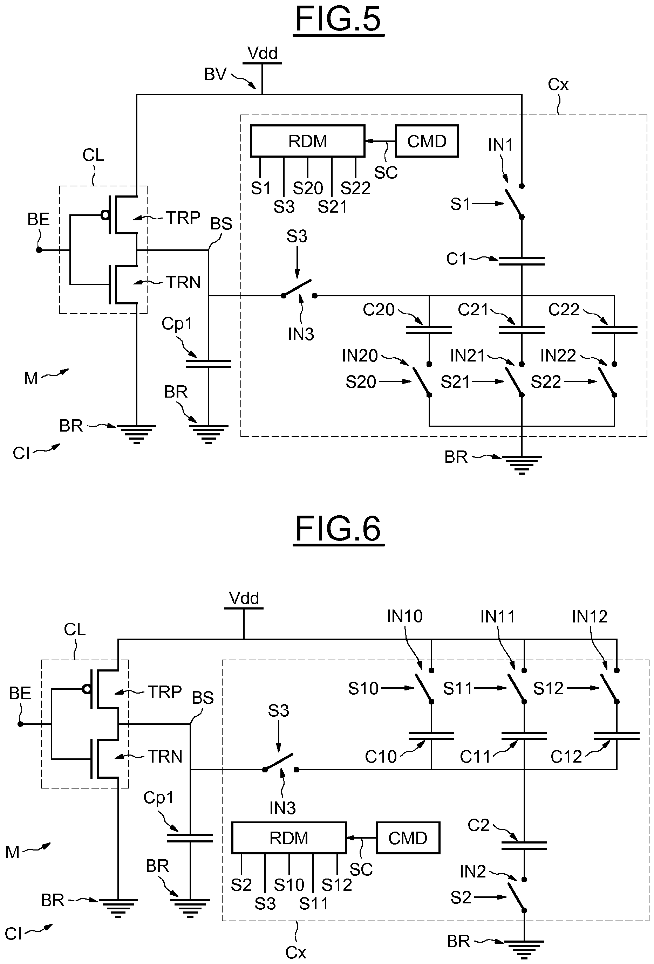

Il est également possible, comme l'illustrent les figures 5 et 6, que le circuit auxiliaire CX, comprenne un nombre différent de premiers condensateurs et de deuxièmes condensateurs.

Ainsi, sur la figure 5, le circuit auxiliaire Cx comporte un seul premier condensateur C1 et trois deuxièmes condensateurs C20, C21, C22.

Sur la figure 6, le circuit auxiliaire Cx comporte un seul deuxième condensateur C2 et trois premiers condensateurs C10, C11, C12.

Cela permet avantageusement de simplifier la réalisation du circuit intégré, et notamment du générateur RDM de signaux aléatoires en restreignant le nombre de sorties nécessaires au fonctionnement du circuit auxiliaire Cx.

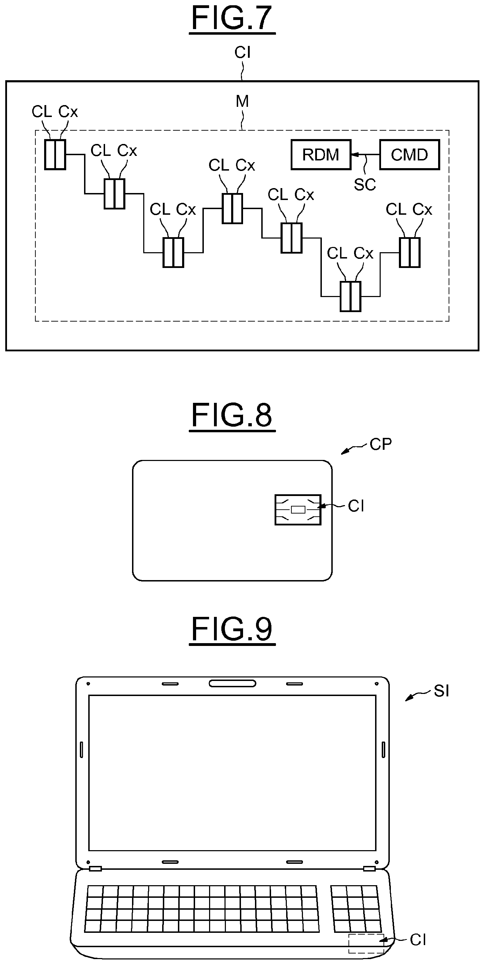

La figure 7 illustre une vue de dessus d'un circuit intégré CI comportant un module M configuré pour réaliser des opérations cryptographiques.

Le module M comporte ici une pluralité de circuits logiques CL couplés en série, chaque circuit logique CL étant associé à un circuit auxiliaire selon l'un ou l'autre des modes de réalisation décrits précédemment en lien avec les figures 2 à 6.

Ici, chacun des circuits logiques CL est associé à un circuit auxiliaire identique, commandé de la même manière par un même générateur RDM de signaux aléatoires. Tous les circuits auxiliaires du module M dépendent donc du même critère aléatoire, et sont donc dans la même configuration.

Il serait toutefois possible que les circuits logiques CL soient associés à des circuits auxiliaires différents, et/ou soient commandés de façon indépendante les uns des autres selon des critères aléatoires différents, par un même générateur RDM de signaux aléatoires délivrant plusieurs critères aléatoires différents, ou chacun par un générateur de signaux aléatoires distinct.

Le circuit intégré CI peut être intégré dans tout type de système électronique, par exemple une carte à puce CP, comme l'illustre la figure 8, ou un appareil informatique, comme l'illustre la figure 9 représentant un ordinateur portable SI.

## Revendications

1. Procédé de gestion de la consommation en courant d'un circuit logique (CL) alimenté entre une borne d'alimentation (BV) et une borne de référence (BR) et comportant au moins une borne de sortie (BS), dans lequel, à chaque transition du signal sur la borne de sortie (BS), on réalise au moins une action choisie dans le groupe formé par
- une atténuation du courant circulant entre la borne d'alimentation (BV) et la borne de référence (BR),
- une augmentation du courant circulant entre la borne d'alimentation (BV) et la borne de référence (BR), ou
- la génération d'un courant supplémentaire circulant à l'intérieur du circuit logique (CL), ce courant n'étant pas fourni par la borne d'alimentation (BV) et n'étant pas observable depuis celle-ci,
ou bien on ne réalise aucune action, le choix de réaliser ou non une action et le choix éventuel de ladite au moins une action dans le groupe étant effectués en fonction d'un critère aléatoire.

2. Procédé selon la revendication 1, dans lequel le critère aléatoire est modifié au rythme des transitions du signal sur la borne de sortie.

3. Procédé selon la revendication 1, dans lequel le critère aléatoire est modifié à un rythme indépendant du rythme d'occurrence des transitions du signal sur la borne de sortie (BS).

4. Circuit électronique comportant une borne d'alimentation (BV) et une borne de référence (BR), comprenant au moins un module (M) comportant au moins un circuit logique (CL) couplé entre la borne d'alimentation (BV) et la borne de référence (BR) et comportant une borne de sortie (BS), et au moins un circuit auxiliaire (Cx) couplé entre la borne d'alimentation (BV) et la borne de référence (BR), et couplé à la borne de sortie (BS), ledit au moins un circuit auxiliaire (Cx) étant configuré pour réaliser au moins une action choisie dans le groupe formé par
- une atténuation du courant circulant entre la borne d'alimentation (BV) et la borne de référence (BR),
- une augmentation du courant circulant entre la borne d'alimentation (BV) et la borne de référence (BR),
- la génération d'un courant supplémentaire circulant à l'intérieur du circuit logique (CL), ce courant n'étant pas fourni par la borne d'alimentation (BV) et n'étant pas observable depuis celle-ci,
ou bien pour ne réaliser aucune action, le choix de réaliser ou non une action et le choix éventuel de ladite au moins une action dans le groupe étant effectués en fonction d'un critère aléatoire.

5. Circuit selon la revendication 4, dans lequel le critère aléatoire est modifié au rythme des transitions du signal sur la borne de sortie.

6. Circuit selon la revendication 4, dans lequel le critère aléatoire est modifié indépendamment du rythme d'occurrence des transitions du signal sur la borne de sortie (BS).

7. Circuit selon l'une quelconque des revendications 4 à 6, dans lequel le circuit auxiliaire (Cx) comporte au moins un premier condensateur (C1) couplé entre la borne d'alimentation (BV) et la borne de sortie (BS), au moins un deuxième condensateur (C2) couplé entre la borne de sortie (BS) et la borne de référence (BR), ledit au moins un premier condensateur (C1) étant couplé à la borne d'alimentation (BV) par l'intermédiaire d'un premier interrupteur (IN1), le deuxième condensateur (C2) étant couplé à la borne de référence (BR) par l'intermédiaire d'un deuxième interrupteur (IN2), et les deux condensateurs étant couplés à la borne de sortie (BS) par l'intermédiaire d'un troisième interrupteur (IN3), les trois interrupteurs étant commandés indépendamment les uns des autres par un générateur (RDM) de signaux aléatoires, l'ensemble des signaux aléatoires formant le critère aléatoire.

8. Circuit selon la revendication 7, dans lequel le circuit auxiliaire (Cx) comporte une pluralité de premiers condensateurs (C1) couplés en parallèle entre la borne d'alimentation (BV) et la borne de sortie (BS), chaque premier condensateur (C1) étant couplé à la borne de sortie par l'intermédiaire d'un interrupteur distinct commandé par le générateur (RDM) de signaux aléatoires.

9. Circuit intégré selon la revendication 7 ou 8, dans lequel le circuit auxiliaire (Cx) comporte une pluralité de deuxièmes condensateurs (C2) couplés en parallèle entre la borne d'alimentation (BV) et la borne de sortie (BS), chaque deuxième condensateur (C2) étant couplé à la borne de sortie par l'intermédiaire d'un interrupteur distinct commandé par le générateur (RDM) de signaux aléatoires.

10. Circuit selon l'une quelconque des revendications 7 à 9 prise en combinaison avec la revendication 5, dans lequel le module (M) est configuré pour réaliser une succession d'opérations de calcul, dans lequel le générateur de signaux aléatoires est configuré pour délivrer les signaux aléatoires en réponse à un signal de commande (SC), et le circuit auxiliaire comporte des moyens de commande aptes à modifier le signal de commande (SC) à chaque nouvelle opération de calcul.

11. Circuit selon l'une quelconque des revendications 7 à 9 prise en combinaison avec la revendication 6, dans lequel le module (M) est configuré pour réaliser des opérations de calcul, et dans lequel le générateur de signaux aléatoires (RDM) est configuré pour délivrer les signaux aléatoires en réponse à un signal de commande (SC), et le circuit auxiliaire (Cx) comporte des moyens de commande aptes à modifier le signal de commande (SC) selon un rythme indépendant des opérations de calcul.

12. Circuit selon l'une quelconque des revendications 4 à 11, dans lequel le module (M) comporte une pluralité de circuits logiques (CL), chacun associé à un circuit auxiliaire (Cx), les interrupteurs de chaque circuit auxiliaire étant commandés de la même façon par le générateur (RDM) de signaux aléatoires.

13. Circuit selon l'une quelconque des revendications 4 à 11, dans lequel le module (M) comporte une pluralité de circuits logiques (CL), chacun associé à un circuit auxiliaire (Cx), les interrupteurs de chaque circuit auxiliaire étant commandés indépendamment par le générateur (RDM) de signaux aléatoires.

14. Système comprenant un circuit intégré selon l'une quelconque des revendications 4 à 13.

15. Système selon la revendication 14, formant une carte à puce (CP) ou un appareil informatique (SI).

## Patentansprüche

1. Verfahren zur Verwaltung des Stromverbrauchs einer logischen Schaltung (CL), die zwischen einem Stromversorgungsanschluss (BV) und einem Referenzanschluss (BR) mit Strom versorgt wird und mindestens einen Ausgangsanschluss (BS) umfasst, wobei bei jedem Übergang des Signals am Ausgangsanschluss (BS) mindestens eine Handlung ausgeführt wird, ausgewählt aus der Gruppe gebildet aus
- einer Abschwächung des Stroms, der zwischen dem Stromversorgungsanschluss (BV) und dem Referenzanschluss (BR) fließt,
- einer Erhöhung des Stroms, der zwischen dem Stromversorgungsanschluss (BV) und dem Referenzanschluss (BR) fließt, oder
- der Erzeugung eines zusätzlichen Stroms, der im Innern der logischen Schaltung (CL) fließt, wobei dieser Strom nicht von dem Stromversorgungsanschluss (BV) zugeführt wird und von diesem aus nicht feststellbar ist,
oder keine Handlung ausgeführt wird, wobei die Wahl, eine Handlung auszuführen oder nicht auszuführen, und die mögliche Wahl der mindestens einen Handlung aus der Gruppe in Abhängigkeit eines Zufallskriteriums durchgeführt werden.

2. Verfahren nach Anspruch 1, wobei das Zufallskriterium im Rhythmus der Signalübergänge am Ausgangsanschluss geändert wird.

3. Verfahren nach Anspruch 1, wobei das Zufallskriterium in einem Rhythmus geändert wird, der unabhängig von dem Rhythmus des Auftretens der Signalübergänge am Ausgangsanschluss (BS) ist.

4. Elektronische Schaltung, umfassend einen Stromversorgungsanschluss (BV) und einen Referenzanschluss (BR), aufweisend mindestens ein Modul (M), das mindestens eine logische Schaltung (CL), die zwischen den Stromversorgungsanschluss (BV) und den Referenzanschluss (BR) geschaltet ist und einen Ausgangsanschluss (BS) umfasst, und mindestens eine Hilfsschaltung (Cx), die zwischen den Stromversorgungsanschluss (BV) und den Referenzanschluss (BR) geschaltet ist und mit dem Ausgangsanschluss (BS) verbunden ist, umfasst, wobei die mindestens eine Hilfsschaltung (Cx) zum Ausführen mindestens einer Handlung konfiguriert ist, ausgewählt aus der Gruppe gebildet aus
- einer Abschwächung des Stroms, der zwischen dem Stromversorgungsanschluss (BV) und dem Referenzanschluss (BR) fließt,
- einer Erhöhung des Stroms, der zwischen dem Stromversorgungsanschluss (BV) und dem Referenzanschluss (BR) fließt,
- der Erzeugung eines zusätzlichen Stroms, der im Innern der logischen Schaltung (CL) fließt, wobei dieser Strom nicht von dem Stromversorgungsanschluss (BV) zugeführt wird und von diesem aus nicht feststellbar ist,
oder zum Ausführen keiner Handlung konfiguriert ist, wobei die Wahl, eine Handlung auszuführen oder nicht auszuführen, und die mögliche Wahl der mindestens einen Handlung aus der Gruppe in Abhängigkeit eines Zufallskriteriums durchgeführt werden.

5. Schaltung nach Anspruch 4, wobei das Zufallskriterium im Rhythmus der Signalübergänge am Ausgangsanschluss geändert wird.

6. Schaltung nach Anspruch 4, wobei das Zufallskriterium unabhängig von dem Rhythmus des Auftretens der Signalübergänge am Ausgangsanschluss (BS) geändert wird.

7. Schaltung nach einem der Ansprüche 4 bis 6, wobei die Hilfsschaltung (Cx) mindestens einen ersten Kondensator (Cl), der zwischen den Stromversorgungsanschluss (BV) und den Ausgangsanschluss (BS) geschaltet ist, und mindestens einen zweiten Kondensator (C2), der zwischen den Ausgangsanschluss (BS) und den Referenzanschluss (BR) geschaltet ist, umfasst, wobei der mindestens eine erste Kondensator (C1) mittels eines ersten Schalters (IN1) mit dem Stromversorgungsanschluss (BV) verbunden ist, wobei der mindestens eine zweite Kondensator (C2) mittels eines zweiten Schalters (IN2) mit dem Referenzanschluss (BR) verbunden ist, und wobei die beiden Kondensatoren mittels eines dritten Schalters (IN3) mit dem Ausgangsanschluss (BS) verbunden sind, wobei die drei Schalter unabhängig voneinander von einem Zufallssignalgenerator (RDM) gesteuert werden, wobei die Gesamtheit der Zufallssignale das Zufallskriterium bildet.

8. Schaltung nach Anspruch 7, wobei die Hilfsschaltung (Cx) mehrere erste Kondensatoren (C1) umfasst, die zwischen dem Stromversorgungsanschluss (BV) und dem Ausgangsanschluss (BS) parallel geschaltet sind, wobei jeder erste Kondensator (C1) mittels eines gesonderten Schalters, der von dem Zufallssignalgenerator (RDM) gesteuert wird, mit dem Ausgangsanschluss verbunden ist.

9. Integrierte Schaltung nach Anspruch 7 oder 8, wobei die Hilfsschaltung (Cx) mehrere zweite Kondensatoren (C2) umfasst, die zwischen dem Stromversorgungsanschluss (BV) und dem Ausgangsanschluss (BS) parallel geschaltet sind, wobei jeder zweite Kondensator (C2) mittels eines gesonderten Schalters, der von dem Zufallssignalgenerator (RDM) gesteuert wird, mit dem Ausgangsanschluss verbunden ist.

10. Schaltung nach einem der Ansprüche 7 bis 9 in Verbindung mit Anspruch 5, wobei das Modul (M) dazu konfiguriert ist, eine Folge von Rechenschritten auszuführen, wobei der Zufallssignalgenerator dazu konfiguriert ist, in Reaktion auf ein Steuersignal (SC) die Zufallssignale auszugeben, und die Hilfsschaltung Steuermittel umfasst, die dazu geeignet sind, das Steuersignal (SC) mit jedem neuen Rechenschritt zu ändern.

11. Schaltung nach einem der Ansprüche 7 bis 9 in Verbindung mit Anspruch 6, wobei das Modul (M) dazu konfiguriert ist, Rechenschritte auszuführen, und wobei der Zufallssignalgenerator (RDM) dazu konfiguriert ist, in Reaktion auf ein Steuersignal (SC) die Zufallssignale auszugeben und die Hilfsschaltung (Cx) Steuermittel umfasst, die dazu geeignet sind, das Steuersignal (SC) gemäß einem Rhythmus zu ändern, der von den Rechenschritten unabhängig ist.

12. Schaltung nach einem der Ansprüche 4 bis 11, wobei das Modul (M) mehrere logische Schaltungen (CL) umfasst, die jeweils einer Hilfsschaltung (Cx) zugeordnet sind, wobei die Schalter jeder Hilfsschaltung auf dieselbe Art von dem Zufallssignalgenerator (RDM) gesteuert werden.

13. Schaltung nach einem der Ansprüche 4 bis 11, wobei das Modul (M) mehrere logische Schaltungen (CL) umfasst, die jeweils einer Hilfsschaltung (Cx) zugeordnet sind, wobei die Schalter jeder Hilfsschaltung auf unabhängige Weise von dem Zufallssignalgenerator (RDM) gesteuert werden.

14. System, umfassend eine integrierte Schaltung nach einem der Ansprüche 4 bis 13.

15. System nach Anspruch 14, das eine Chipkarte (CP) oder eine Computereinrichtung (SI) bildet.

## Claims

1. Method for managing the current consumption of a logic circuit (CL) supplied with power between a supply terminal (BV) and a reference terminal (BR) and including at least one output terminal (BS), wherein, on each transition of the signal on the output terminal (BS), at least one action is carried out, this action being chosen from the group formed by:
- attenuating the current flowing between the supply terminal (BV) and the reference terminal (BR) ;
- increasing the current flowing between the supply terminal (BV) and the reference terminal (BR); or
- generating an additional current that flows through the logic circuit (CL), this current not being delivered by the supply terminal (BV) and not being observable therefrom;
or indeed no action is carried out, the choice as to whether or not to carry out an action and the possible choice of said at least one action from the group being made depending on a random criterion.

2. Method according to Claim 1, wherein the random criterion is modified at the tempo of the transitions of the signal on the output terminal.

3. Method according to Claim 1, wherein the random criterion is modified at a tempo independent of the tempo of occurrence of the transitions of the signal on the output terminal (BS).

4. Electronic circuit including a supply terminal (BV) and a reference terminal (BR), comprising at least one module (M) including at least one logic circuit (CL) connected between the supply terminal (BV) and the reference terminal (BR) and including an output terminal (BS), and at least one auxiliary circuit (Cx) connected between the supply terminal (BV) and the reference terminal (BR), and connected to the output terminal (BS), said at least one auxiliary circuit (Cx) being configured to carry out at least one action chosen from the group formed by:
- attenuating the current flowing between the supply terminal (BV) and the reference terminal (BR) ;
- increasing the current flowing between the supply terminal (BV) and the reference terminal (BR);
- generating an additional current that flows through the logic circuit (CL), this current not being delivered by the supply terminal (BV) and not being observable therefrom;
or indeed to carry out no action, the choice as to whether or not to carry out an action and the possible choice of said at least one action from the group being made depending on a random criterion.

5. Circuit according to Claim 4, wherein the random criterion is modified at the tempo of the transitions of the signal on the output terminal.

6. Circuit according to Claim 4, wherein the random criterion is modified independently of the tempo of occurrence of the transitions of the signal on the output terminal (BS).

7. Circuit according to any one of Claims 4 to 6, wherein the auxiliary circuit (Cx) includes at least one first capacitor (C1) connected between the supply terminal (BV) and the output terminal (BS), at least one second capacitor (C2) connected between the output terminal (BS) and the reference terminal (BR), said at least one first capacitor (C1) being connected to the supply terminal (BV) via a first switch (IN1), the second capacitor (C2) being connected to the reference terminal (BR) via a second switch (IN2), and the two capacitors being connected to the output terminal (BS) via a third switch (IN3), the three switches being controlled independently of one another by a random-signal generator (RDM), the random signals together forming the random criterion.

8. Circuit according to Claim 7, wherein the auxiliary circuit (Cx) includes a plurality of first capacitors (C1) connected in parallel between the supply terminal (BV) and the output terminal (BS), each first capacitor (C1) being coupled to the output terminal via a separate switch controlled by the random-signal generator (RDM).

9. Integrated circuit according to Claim 7 or 8, wherein the auxiliary circuit (Cx) includes a plurality of second capacitors (C2) connected in parallel between the supply terminal (BV) and the output terminal (BS), each second capacitor (C2) being connected to the output terminal via a separate switch controlled by the random-signal generator (RDM).

10. Circuit according to any one of Claims 7 to 9 in combination with Claim 5, wherein the module (M) is configured to carry out a succession of computational operations, wherein the random-signal generator is configured to deliver the random signals in response to a control signal (SC), and the auxiliary circuit includes control means suitable for modifying the control signal (SC) on each new computational operation.

11. Circuit according to any one of Claims 7 to 9 in combination with Claim 6, wherein the module (M) is configured to carry out computational operations, and wherein the random-signal generator (RDM) is configured to deliver the random signals in response to a control signal (SC), and the auxiliary circuit (Cx) includes control means suitable for modifying the control signal (SC) at a tempo independent of the computational operations.

12. Circuit according to any one of Claims 4 to 11, wherein the module (M) includes a plurality of logic circuits (CL), each associated with an auxiliary circuit (Cx), the switches of each auxiliary circuit being controlled in the same way by the random-signal generator (RDM).

13. Circuit according to any one of Claims 4 to 11, wherein the module (M) includes a plurality of logic circuits (CL), each associated with one auxiliary circuit (Cx), the switches of each auxiliary circuit being controlled independently by the random-signal generator (RDM).

14. System comprising an integrated circuit according to any one of Claims 4 to 13.

15. System according to Claim 14, forming a chip card (CP) or a piece of information-technology apparatus (SI) .
